(19) Europäisches Patentamt

European Patent Office

Office européen des brevets

(11) Veröffentlichungsnummer: **0 429 937 B1**

(12) **EUROPÄISCHE PATENTSCHRIFT**

(45) Veröffentlichungstag der Patentschrift: **30.03.94**

(21) Anmeldenummer: **90121605.1**

(22) Anmeldetag: **12.11.90**

(51) Int. Cl.5: **C08F 10/00**, C08F 4/02, C08F 4/24

(54) **Katalysator zur Herstellung von hochmolekularen Homo- oder Copolymerisaten des Ethens sowie dessen Herstellung.**

(30) Priorität: **23.11.89 DE 3938723**

(43) Veröffentlichungstag der Anmeldung:
**05.06.91 Patentblatt 91/23**

(45) Bekanntmachung des Hinweises auf die
Patenterteilung:
**30.03.94 Patentblatt 94/13**

(84) Benannte Vertragsstaaten:
**AT BE CH DE ES FR GB IT LI NL SE**

(56) Entgegenhaltungen:
**DE-A- 2 540 278**
**DE-A- 3 640 802**

(73) Patentinhaber: **BASF Aktiengesellschaft
Carl-Bosch-Strasse 38
D-67063 Ludwigshafen(DE)**

(72) Erfinder: **Gropper, Hans, Dr.
Hardenburgstrasse 8
W-6703 Limburgerhof(DE)**
Erfinder: **Funk, Guido, Dr.
Duererstrasse 5
W-6520 Worms 1(DE)**
Erfinder: **Kolk, Erich, Dr.
Im Rustengut 14
W-6702 Bad Duerkheim(DE)**
Erfinder: **Oeder, Dieter, Dr.
Am Wingertsberg 18
W-6719 Weisenheim(DE)**

**Beschreibung**

Die vorliegende Erfindung betrifft einen neuen Katalysator zur Herstellung von hochmolekularen Homo- oder Copolymerisaten des Ethens, der erhältlich ist, indem man

(1) einen auf Siliciumdioxid basierenden Trägerstoff mit

(2) Chromtrioxid oder einer unter den Bedingungen der Stufe (3) in Chromtrioxid überführbaren Chromverbindung belädt und dann

(3) das resultierende Zwischenprodukt in einem Sauerstoff enthaltenden Gasstrom erhitzt, wobei als Trägerstoff (1) ein spezielles Kieselsäure-Xerogel verwendet wird, das durch Extraktion von maximal 30 % Wasser mittels Alkanolen, Alkanonen oder deren Gemischen aus einem Kieselsäure-Hydrogel, anschließendem Trocknen, Zerkleinern und Fraktionieren erhältlich ist,

sowie ein Verfahren zur Herstellung von Homo- oder Copolymerisaten mit solchen Katalysatoren.

Katalysatoren zur Herstellung von Homo- und Copolymerisaten des Ethens sind bekannt und werden beispielsweise in der DE-PS 25 40 278 beschrieben. Dabei handelt es sich um Chromtrioxid-Katalysatoren, bei deren Herstellung ein feinteiliges Kieselsäure-Xerogel verwendet wird, das aus einem sprühgetrockneten Kieselsäure-Hydrogel nach mindestens 60 %iger Wasserextraktion durch $C_1$-$C_4$-Alkanole, $C_3$-$C_5$-Alkanone oder deren Gemische hergestellt wurde. Mittels dieses Katalysators hergestellte Olefinpolymerisate sind zwar wegen der niedrigen Schmelzviskosität leicht verarbeitbar, weisen aber unzureichende morphologische Eigenschaften wie niedriges Polyethylenschüttgewicht und hohen Feinstaubanteil auf.

Polymerisate mit besseren morphologischen Eigenschaften werden nach der DE-OS 36 40 802 erhalten, wobei Trägermaterialien mit sehr enger Korngrößenverteilung verwendet werden. Die nach dieser Schrift hergestellten Polymerisate mit hohem Molekulargewicht weisen jedoch kein hohes Schüttgewicht auf. Zudem ist die Katalysatorherstellung wegen der Anforderung an die enge Korngrößenverteilung sehr schwierig.

In der DE-OS 36 34 534 und der DE-OS 36 40 803 wird eine Kombination von Chromtrioxid-Katalysatoren mit Lithiumalkyl-Cokatalysatoren beschrieben. Genügend hohe Schüttdichten werden insbesondere bei der Herstellung von hochmolekularen Polyethylenen mit hoher Zähigkeit auch in diesen Verfahren nicht erreicht. Weiterhin besteht der Nachteil, daß Metallalkyl-Cokatalysatoren spezielle Lager- und Dosiereinrichtungen benötigen, was das Verfahren aufwendig macht.

Aufgabe der vorliegenden Erfindung war es, einen Katalysator zur Verfügung zu stellen, der die Herstellung von hochmolekularen Olefinpolymerisaten mit der Eigenschaftskombination hohe Zähigkeit, gute Verarbeitbarkeit und optimale Polymerisatmorphologie ermöglicht.

Gelöst wurde die Aufgabe durch Verwendung eines Chromtrioxid-Katalysators, wobei als Trägerstoff ein spezielles Kieselsäure-Xerogel verwendet wird, das durch Extraktion von maximal 30 Gew.% Wasser mittels Alkanolen, Alkanonen oder deren Gemischen aus einem Kieselsäure-Hydrogel, anschließendem Trocknen, Zerkleinern und Fraktionieren erhältlich ist.

Gegenstand der vorliegenden Erfindung ist ein Verfahren zur Herstellung eines Trägerkatalysators für die Polymerisation von $\alpha$-Olefinen, indem man

(1) einen auf Siliciumdioxid basierenden Trägerstoff herstellt, mit

(2) Chromtrioxid oder einer unter den Bedingungen der Stufe (3) in Chromtrioxid überführbaren Chromverbindung belädt und

(3) in einem wasserfreien, Sauerstoff in einer Konzentration von über 10 Vol.-% enthaltenden Gasstrom 10 bis 1000 Minuten auf einer Temperatur von 400 bis 1100 °C hält,

indem man zur Herstellung des Trägerstoffes (1)

(1.1) in einem unter Drall stehenden Strom einer wäßrigen Mineralsäure längs sowie tangential zum Strom eine Natrium- oder Kaliumwasserglaslösung einbringt, das dabei entstehende Kieselsäurehydrosol in ein gasförmiges Medium tropfenförmig versprüht, zum Hydrogel erstarren läßt und das so erhaltene Hydrogel ohne vorherige Alterung durch Waschen von Salzen befreit,

(1.2) aus dem Hydrogel (1.1) mittels einem $C_1$-$C_4$-Alkanol, $C_3$-$C_5$-Alkanon oder deren Gemische maximal 30 % des im Hydrogel enthaltenen Wassers extrahiert,

(1.3) das Hydrogel trocknet, bis bei 180 °C unter einem Vakuum von 10 Torr kein Gewichtsverlust mehr auftritt, wobei Xerogel-Bildung erfolgt,

(1.4) und das so gewonnene Xerogel mahlt und fraktioniert.

Ein weiterer Gegenstand der Erfindung ist ein Verfahren zur Herstellung von hochmolekularen Ethen-Homopolymerisaten und Ethen-Copolymerisaten mit untergeordneten Mengen an einpolymerisierten $C_3$-$C_{12}$-$\alpha$-Monoolefinen sowie diese (Co)Polymerisate selbst.

Zu den Aufbaukomponenten und Verfahrensparametern ist folgendes auszuführen:

2

Stufe (1):

(1.1) Die Herstellung der Aufbaukomponente (1) erfolgt in drei oder vier Stufen und beginnt mit der Herstellung eines aus der DE-PS-25 40 278 bekannten Kieselsäure-Hydrogels. Danach wird von einem 10 bis 25 gew.%igen Feststoff (berechnet als Siliciumdioxid) enthaltenden Kieselsäure-Hydrogel ausgegangen, das weitgehend kugelförmig ist, einen Teilchendurchmesser im Bereich von 1 bis 8 mm hat und erhalten wird, indem man in einem unter Drall stehenden Strom einer wäßrigen Mineralsäure längs sowie tangential zum Strom eine Natrium- oder Kaliumwasserglaslösung einbringt, das dabei entstehende Kieselsäure-Hydrosol in ein gasförmiges Medium tropfenförmig versprüht, zum Hydrogel erstarren läßt und das so erhaltene weitgehend kugelförmige Hydrogel ohne vorherige Alterung durch Waschen von Salzen befreit.

(1.2) Aus diesem Kieselsäure-Hydrogel werden mittels einem organischen Lösungsmittel aus der Reihe $C_1$-$C_4$-Alkanole wie Methanol, Ethanol, Isopropanol und tert.-Butanol oder $C_3$-$C_5$-Alkanone wie Aceton oder Butanon oder deren Gemische bis maximal 30 Gew.% des Wassers extrahiert. Für den Fall einer Extraktion werden 0,1 bis 30 Gew.%, bevorzugt 1 bis 20 Gew.% des im Kieselsäure-Hydrogel enthaltenen Wassers extrahiert. Die Extraktion des Wassers aus dem Kieselsäure-Hydrogel mittels der genannten Lösungsmittel kann in üblichen Extraktionsvorrichtungen erfolgen. Geeignete Vorrichtungen sind z.B. Säulenextraktoren.

Für das gezielte Extrahieren von maximal 30 % des im Hydrogel enthaltenen Wassers ist es vorteilhaft, dem Lösungsmittel vor dem Extrahieren bis zu 50 % Wasser zuzugeben, sofern dies ohne Entmischung möglich ist. Die Limitierung der Wasserextraktion auf maximal 30 % kann über die eingesetzten Flüssigkeitsmengen, die Extraktionstemperatur und Extraktionszeit erreicht werden.

In einer bevorzugten Ausführungsform wird auf die Wasserextraktion aus dem Kieselsäure-Hydrogel gänzlich verzichtet und dieses unmittelbar der Trocknungsstufe (1.3) zugeführt, so daß die Stufe (1.2) entfällt.

(1.3) Die Überführung des nach Stufe (1.1) oder (1.2) erhaltenen Kieselsäure-Hydrogels in das Kieselsäure-Xerogel erfolgt durch Trocknung in üblichen Trocknungsvorrichtungen. Dabei erhält man die besten Ergebnisse, wenn man bei Produkttemperaturen von 80 bis 200°C und Drücken von 1 bis 250 Torr trocknet. Durch strömende Schleppgase wie beispielsweise Stickstoff, kann der Trocknungsvorgang insbesondere bei relativ hohen Drücken beschleunigt werden. Die Trocknung wird beendet, wenn bei 180°C unter einem Vakuum von 10 Torr während Minuten kein Gewichtsverlust mehr auftritt.

(1.4) Die Kieselsäure-Xerogele der Stufe (1.3) werden mit üblichen Mahlvorrichtungen gemahlen und durch Sieben auf Teile mit einem Durchmesser von 1 bis 2000 $\mu$m, bevorzugt 1 bis 300 $\mu$m fraktioniert. Die Teilchen haben eine Oberfläche von 100 bis 1000 m$^2$/g, bevorzugt 200 bis 600 m$^2$/g und ein Porenvolumen von 0,5 bis 1,5 cm$^3$/g, bevorzugt 0,8 bis 1,3 cm$^3$/g.

Stufe (2):

Der so gewonnene Trägerstoff (1) wird nach bekannten Methoden, wie sie beispielsweise in der DE-PS 25 40 278 oder DE-OS 36 40 802 beschrieben sind, mit Chromtrioxid oder einer unter den Bedingungen der Stufe (3) in Chromtrioxid überführbaren Chromverbindung beladen. Die Beladung erfolgt im Gewichtsverhältnis Trägerstoff:Chrom von 100:0,1 bis 100:10, bevorzugt 100:0,3 bis 100:3.

Bevorzugt wird so verfahren, daß man den Trägerstoff (1) in einer Lösung von Chromtrioxid oder einer unter den Bedingungen der Stufe (3) in Chromtrioxid überführbaren Chromverbindung suspendiert und unter dauernder möglichst homogener Durchmischung des Ansatzes dessen flüssige Bestandteile wie Alkanon bzw. Alkanol sowie gegebenenfalls Wasser verdampft. Hierbei ist es am zweckmäßigsten bei Temperaturen von 20 bis 150°C und Drücken von 10 bis 760 Torr zu arbeiten. Nicht kritisch ist, wenn der mit der Chromkomponente beladene Trägerstoff noch eine gewisse Restfeuchte enthält. Die flüchtigen Bestandteile sollten aber nicht mehr als 20, insbesondere nicht mehr als 10 Gew.%, bezogen auf den Trägerstoff, betragen. Geeignete Chromkomponenten sind vor allem Chromtrioxid sowie Chromhydroxid. Weiterhin kommen lösliche Salze des dreiwertigen Chroms in Betracht mit einer organischen oder anorganischen Säure wie Acetat, Oxalat, Sulfat, Nitrat. Besonders geeignet sind solche Salze derartiger Säuren, die beim Aktivieren rückstandsfrei in Chromtrioxid übergehen. Auch können Chromverbindungen in Form von Chelaten eingesetzt werden, wie Chromacetylacetonat.

Stufe (3):

Die dritte Stufe der Herstellung des Chromtrioxid-Katalysators dient dessen Aktivierung und ist beispielsweise aus der DE-OS 15 20 467 bekannt.

Für die Herstellung des vorliegenden Chromtrioxid-Katalysators hat sich besonders folgende Verfahrensweise bewährt. Der beladene Trägerstoff der Stufe (2) wird in einem wasserfreien und Sauerstoff in einer Konzentration von über 10 Vol.% enthaltenden Gasstrom 10 bis 1000 Minuten, bevorzugt 150 bis 700 Minuten, auf eine Temperatur von 400 bis 1100°C, bevorzugt 500 bis 800°C gehalten und danach auf Raumtemperatur abgekühlt. Der so erhaltene Katalysator hat einen Chromgehalt von 0,5 bis 3,0 Gew.%, bevorzugt 0,7 bis 1,5 Gew.% und kann unmittelbar im Polymerisationsverfahren für $\alpha$-Olefine verwendet werden.

Das Polymerisationsverfahren von $\alpha$-Olefinen ist durch eine Vielzahl von Veröffentlichungen bekannt und kann in allen üblichen Technologien durchgeführt werden wie als diskontinuierliches, taktweises oder kontinuierliches Verfahren, als Suspensions-Polymerisationsverfahren oder als Trockenphasen-Polymerisationsverfahren im gerührten oder gewirbelten Bett. Zur näheren Erläuterung seien die Schriften DE-PS 10 51 004, GB-PS 841 263, EP 004 646 und US 3 254 070 genannt. Bevorzugt eignet sich jedoch das neue Polymerisationsverfahren zur Herstellung von grießförmigem Ethen-Homopolymerisaten sowie Ethen-Copolymerisaten mit untergeordneten Mengen an einpolymerisierten $C_3$-$C_{12}$-$\alpha$-Monoolefinen durch Polymerisation des bzw. der Monomeren bei Temperaturen von 70 bis 150°C und Drücken von 2 bis 150 bar.

Die Polymerisate zeichnen sich durch eine hohe Molmasse, charakterisiert durch Grenzviskositäten von 3,0 bis 6,0 dl/g, hoher Zähigkeit, guter Verarbeitbarkeit mit MFI-Werten von 0,01 bis 0,5 g/10 min, high-load MFI-Werten von 1,0 bis 20,0 g/10 min, einem Schmelzflußverhältnis von 50 bis 200 und sehr guter Polymerisatmorphologie aus. Die Schüttdichten liegen über 460 g/l, bevorzugt zwischen 470 bis 550 g/l. Die Polymerisate eignen sich besonders für die Anwendung nach dem Folienblas- und Blasform-Verfahren.

Beispiel 1

Herstellung des Trägerstoffs (Xerogel)

Es wurde eine in der Figur US-PS 3 872 217 dargestellte Mischdüse mit folgenden Daten benutzt: Der Durchmesser der zylindrischen, aus einem Kunststoffschlauch gebildeten Mischkammern betrug 14 mm, die Mischraumlänge (einschließlich Nachmischstrecke) 350 mm. Nahe der stirnseitig verschlossenen Eintrittsseite der Mischkammer war eine tangentiale Einlaufbohrung von 4 mm Durchmesser für die Mineralsäure angebracht. Es schlossen sich vier weitere Bohrungen mit ebenfalls 4 mm Durchmesser und gleicher Einlaufrichtung für die Wasserglaslösung an, wobei der Abstand der Bohrung voneinander, in Längsrichtung der Mischkammer gemessen, 30 mm betrug. Für die primäre Mischzone war demnach des Verhältnis von Länge: Durchmesser etwa gleich 10. Für die sich anschließende sekundäre Mischzone lag dieses Verhältnis bei 15. Als Spritzmundstück wurde ein flachgedrücktes, leicht nierenförmig ausgebildetes Rohrstück über das Austrittsende des Kunststoffschlauches geschoben.

Beschickt wurde diese Mischvorrichtung mit 325 l/h 33 gew.%iger Schwefelsäure von 20°C mit einem Betriebsdruck von ca. 3 bar sowie 1100 l/h Wasserglaslösung (hergestellt aus technischem Wasserglas mit 27 Gew.% $SiO_2$ und 8 Gew.% $Na_2O$ durch Verdünnen mit Wasser) mit einem Litergewicht von 1,20 kg/l und einer Temperatur von ebenfalls 20°C mit einem Druck von ebenfalls ca. 3 bar. In der mit dem Kunststoffschlauch ausgekleideten Mischkammer wurde durch fortschreitende Neutralisation ein unbeständiges Hydrosol mit einem pH-Wert zwischen 7 und 8 gebildet, das bis zu vollständigen Homogenisierung noch etwa 0,1 Sekunden in der Nachmischzone verbleibt, bevor es durch das Düsenmundstück als flächenförmiger Flüssigkeitsstrahl in die Atmosphäre gespritzt wurde. Der Strahl zerteilte sich während des Fluges durch die Luft in einzelne Tropfen, die infolge der Oberflächenspannung in eine weitgehend kugelige Form übergingen und die noch während ihres Fluges innerhalb ca. einer Sekunde zu Hydrogel-Kugeln erstarren. Die Kugeln hatten eine glatte Oberfläche, waren glasklar, enthielten etwa 17 Gew.% $SiO_2$ und hatten folgende Kornverteilung:

| > 8 mm | 10 Gewichtsprozent |
|--------|--------------------|
| 6-8 mm | 45 Gewichtsprozent |
| 4-6 mm | 34 Gewichtsprozent |
| < 4 mm | 11 Gewichtsprozent |

4

Die Hydrogel-Kugeln wurden am Ende ihres Fluges in einem Waschturm aufgefangen, der nahezu vollständig mit Hydrogel-Kugeln gefüllt war, und in dem die Kugeln sofort ohne Alterung mit ca. 50°C warmem, schwach ammoniakalischem Wasser in einem kontinuierlich verlaufenden Gegenstromprozeß salzfrei gewaschen wurden.

Durch Sieben isolierte man die Kugeln, die einen Durchmesser im Bereich von 2 bis 6 mm hatten und trocknete sie anschließend bei 180°C unter einem Vakuum von 10 Torr 8 Stunden lang; es trat dann unter den genannten Bedingungen während 30 Minuten kein Gewichtsverlust mehr auf.

Anschließend wurden die getrockneten Kugeln gemahlen und durch Sieben Teile von 1 bis 300 $\mu$m fraktioniert.

Herstellung des Katalysators

15 kg des oben beschriebenen Xerogels und 40 l einer 4,1 gew.%igen Lösung von Chrom(III)nitrat-9-hydrat in Ethanol wurden in einen Doppelkonusmischer gefüllt. Unter Rotation des von außen mit Dampf auf 130°C beheizten Mischers wurde dann im Wasserstrahlvakuum das Ethanol abdestilliert.

Das dabei resultierende Produkt wurde in einem Fließbett, welches von Luft durchströmt wurde, für 6 Stunden auf eine Temperatur von 600°C erhitzt und dann wieder abgekühlt. Ab 140°C wurde das Fließbett von Stickstoff durchspült, um Sauerstoffspuren, die bei der Polymerisation stören, zu beseitigen.

Der so gewonnene Katalysator hatte einen analytisch ermittelten Chromgehalt von rund 0,0002 mol/g.

Polymerisation

Es wurde in einem bei der kontinuierlichen Polymerisation von Ethen üblichen Reaktor gearbeitet, dessen Reaktionsraum aus einem Rohrkreis von 4 m$^3$ Inhalt bestand. Der Reaktionsraum war gefüllt mit einer 45 gew.%igen Suspension von Polymerisat in Isobutan, die durch eine Propellerpumpe mit 3000 Upm so rasch umgepumpt wurde, daß eine turbulente Strömung vorhanden war. In dem Reaktor wurde eine Temperatur von 106°C aufrechterhalten. Weiterhin wurden durch Regelung die Menge an ein- und ausgeschleustem Suspensionsmittel von je 570 kg/h Isobutan und die Konzentration von 11 Vol.% des im Suspensionsmittel gelösten monomeren Ethens konstant gehalten.

Im kontinuierlichen-stationären Betrieb wurden bei der Einschleusung von 100 g/h Katalysator 800 kg/h Polymerisat ausgeschleust.

Das Polymerisat mit einem HLMI von 2,0 g/10 Minuten wies hohe Molmasse, was durch die Grenzviskosität belegt wird, hohe Zähigkeit (Tabelle), geringe Polyethylenfeinstkornanteile <125 $\mu$m und eine hohe Polyethylenschüttdichte auf.

Tabelle

| | Bsp.1 | Bsp.2 | V-Bsp.1 | V-Bsp.2 | V-Bsp.3 | V-Bsp.4 | V-Bsp.5 |
|---|---|---|---|---|---|---|---|
| Wasserextraktion aus Träger mittels Alkanol/Alkanon [%] | – | 20 | 95 | 95 | 95 | 95 | 95 |
| Teilchendurchmesser Katalysatorträger [$\mu$m] | 1–300 | 1–300 | 40–300 | 40–300 | 50–100 | 40–300 | 50–100 |
| Polymerisationstemp. [°C] | 106 | 105 | 98 | 106 | 99 | 102 | 102 |
| Lithiumalkyl-Cokat. | nein | nein | nein | nein | nein | ja | ja |
| HLMI 190°/21.6 kp [g/10 min] (nach DIN 53 735) | 2.0 | 2.1 | 2.0 | 7.2 | 1.9 | 2.0 | 1.9 |
| Grenzviskosität [$\eta$] [dl/g] (nach DIN 53 733) | 4.86 | 4.89 | 4.85 | 3.41 | 4.91 | 4.83 | 4.87 |
| Zähigkeit –30°C [kJ/m$^2$] (nach DIN 53 448/1B) | 285 | 289 | 280 | 145 | 290 | 279 | 279 |
| Polymerisatfeinstkorn <125$\mu$m [%] (nach DIN 53 477) | 0.7 | 0.6 | 2.8 | 2.5 | 1.2 | 1.1 | 1.1 |
| Schüttdichte [g/l] (nach DIN 53 468) | 520 | 510 | 400 | 460 | 420 | 440 | 460 |

Beispiel 2

Es wurde wie in Beispiel 1 gearbeitet, mit den Ausnahmen
(a) daß man bei der Herstellung des Katalysatorträgers 112 kg der sprühgetrockneten Hydrogelkugeln, die auf einen Durchmesser zwischen 2 und 6 mm gesiebt worden waren, in ein Extraktionsfaß mit Zulauf an der Oberseite, einem Siebboden und einem schwanenhalsförmigen Überlauf gab und 900 l eines Gemischs aus 90 Gew.-Teilen Ethanol und 10 Gew.-Teilen Wasser hinzufügte, so daß die Kugeln vollkommen mit Flüssigkeit bedeckt waren. Anschließend ließ man 4 Stunden lang 80 l/h des Gemisches über Zu- und Ablauf zirkulieren und trennte schließlich die Flüssigkeit über den Siebboden vom Feststoff ab. 20 % des im Hydrogel enthaltenen Wassers wurden so extrahiert. Es folgte Trocknung und Mahlung gemäß Beispiel 1

(b) und daß man bei einer Polymerisationstemperatur von 105°C arbeitete.

Bei Einschleusung von 100 g/h Katalysator wurden 1000 kg/h Polymerisat ausgeschleust mit vergleichbar guten Produkteigenschaften wie beim Arbeiten nach Beispiel 1 (vgl. Tabelle).

Vergleichsbeispiel 1

Es wurde wie in Beispiel 2 gearbeitet, mit den Ausnahmen, daß

(a) gemäß DE 25 40 278 95 % des im Hydrogelträger enthaltenen Wassers mit reinem Ethanol extrahiert wurden

(b) und das getrocknete Xerogel auf Korngrößen zwischen 40 und 300 μm gemahlen und gesiebt wurde.

Ein Polymerisat mit einem HLMI von 2,0 g/10 min wurde bei einer Polymerisationstemperatur von 98°C erhalten. Bei Einschleusung von 100 g/h Katalysator wurden 750 kg/h Polymerisat ausgeschleust mit gegenüber den Beispielen 1 und 2 deutlich erhöhtem Polymerisatfeinstkornanteil und sehr viel niedrigerer Polymerisat-Schüttdichte (vgl. Tabelle).

Vergleichsbeispiel 2

Es wurde wie in Vergleichsbeispiel 1 gearbeitet, mit der einzigen Ausnahme, daß die Polymerisation wie im Beispiel 1 bei 106°C erfolgte.

Bei 100 g/h Katalysatoreinschleusung wurden 850 kg/h Polymerisat ausgeschleust, das zwar deutlich höhere Polymerisatschüttdichte, nicht aber vergleichbare HLMI-, Grenzviskositäts- und Zähigkeitswerte aufwies. Zudem blieb der Polymerisatfeinstkornanteil unverändert hoch (vgl. Tabelle).

Vergleichsbeispiel 3

Es wurde wie in Vergleichsbeispiel 1 gearbeitet, mit der Ausnahme, daß gemäß DOS 36 40 802 die Xerogelträgerteilchen aufwendig auf sehr enge Partikelgrößenverteilung zwischen 50 und 100 μm gemahlen und gesiebt wurden.

Bei 106°C Polymerisationstemperatur und 100 g/h Katalysatoreinschleusung wurden 800 kg/h Polymerisat mit einem HLMI von 1,9 g/10 min, hoher Grenzviskosität und Zähigkeit, aber im Vergleich zu den Beispielen 1 und 2 unbefriedigender Polymerisatmorphologie erhalten (vgl. Tabelle).

Vergleichsbeispiel 4

Es wurde wie in Vergleichsbeispiel 1 gearbeitet, mit der Ausnahme, daß gemäß DOS 36 34 534 in der Polymerisation als Cokatalysator 1 g/h n-Butyllithium in den Reaktor dosiert wurden.

Bei einer Polymerisationstemperatur von 102°C und 100 g/h Katalysatoreinschleusung erhielt man 800 kg/h Polymerisat mit einem HLMI von 2.0 g/10 min, hoher Grenzviskosität und Zähigkeit aber mit weiterhin unzureichender Polymerisatmorphologie (vgl. Tabelle).

Vergleichsbeispiel 5

Es wurde wie in Vergleichsbeispiel 3 gearbeitet, mit der Ausnahme, daß gemäß DOS 36 40 803 in der Polymerisation als Cokatalysator 1 g/h n-Butyllithium in den Reaktor dosiert wurden.

Bei einer Polymerisationstemperatur von 102°C und 100 g/h Katalysatoreinschleusung erhielt man 820 kg/h Polymerisat mit einem HLMI von 1.9 g/10 min, hoher Grenzviskosität und Zähigkeit. Die morphologischen Eigenschaften des Polymerisats erreichten bei weitem nicht die guten Werte des erfindungsgemäßen Verfahrens (vgl. Tabelle).

**Patentansprüche**

1. Verfahren zur Herstellung eines Trägerkatalysators für die Polymerisation von $\alpha$-Olefinen, indem man
   (1) einen auf Siliciumdioxid basierenden Trägerstoff herstellt, mit

(2) Chromtrioxid oder einer unter den Bedingungen der Stufe (3) in Chromtrioxid überführbaren Chromverbindung belädt und

(3) in einem wasserfreien, Sauerstoff in einer Konzentration von über 10 Vol.-% enthaltenden Gasstrom 10 bis 1000 Minuten auf einer Temperatur von 400 bis 1100 °C hält,

dadurch gekennzeichnet, daß man zur Herstellung des Trägerstoffes (1)

(1.1) in einem unter Drall stehenden Strom einer wäßrigen Mineralsäure längs sowie tangential zum Strom eine Natrium- oder Kaliumwasserglaslösung einbringt, das dabei entstehende Kieselsäure-Hydrosol in ein gasförmiges Medium tropfenförmig versprüht, zum Hydrogel erstarren läßt und das so erhaltene Hydrogel ohne vorherige Alterung durch Waschen von Salzen befreit,

(1.2) aus dem Hydrogel (1.1) mittels einem $C_1$-$C_4$-Alkanol, $C_3$-$C_5$-Alkanon oder deren Gemische maximal 30 % des im Hydrogel enthaltenen Wassers extrahiert,

(1.3) das Hydrogel trocknet, bis bei 180 °C unter einem Vakuum von 10 Torr kein Gewichtsverlust mehr auftritt, wobei Xerogel-Bildung erfolgt,

(1.4) und das so gewonnene Xerogel mahlt und nach Teilchengröße fraktioniert.

**2.** Verfahren nach Anspruch 1, dadurch gekennzeichnet, daß man die Trocknung des Hydrogels (1.3) ohne vorhergehende Extraktion (1.2) durchführt.

**3.** Verfahren nach Anspruch 1 oder 2, dadurch gekennzeichnet, daß man als Trägerstoff (1) ein Kieselsäure-Xerogel verwendet mit einem Teilchendurchmesser von 1 bis 2000 µm, einer Oberfläche von 100 bis 1000 $m^2$/g und einem Porenvolumen von 0,5 bis 1,5 $cm^3$/g.

**4.** Trägerkatalysator für die Polymerisation von α-Olefinen, erhältlich nach einem Verfahren gemäß einem der Ansprüche 1 bis 3.

**5.** Verfahren zur Herstellung von hochmolekularen Ethen-Homopolymerisaten oder Ethen-Copolymerisaten mit untergeordneten Mengen an einpolymerisierten $C_3$-$C_{12}$-α-Monoolefinen durch Polymerisation der Monomeren bei Temperaturen von 70 bis 150 °C und Drücken von 2 bis 150 bar mittels eines Chromtrioxid-Katalysators, dadurch gekennzeichnet, daß man als Katalysator den Trägerkatalysator gemäß Anspruch 4 verwendet.

**6.** Ethen-Homopolymerisate oder Ethen-Copolymerisate mit untergeordneten Mengen an einpolymerisierten $C_3$-$C_{12}$-α-Monoolefinen in granularer Form mit einer durchschnittlichen Teilchengröße von 0,5 bis 1,5 mm, einem Schmelzindex (190 °C, 21,6 kp) von 1,0 bis 20,0 g/10 min, einem Schmelzflußverhältnis von 50 bis 200 und einer Schüttdichte von 470 bis 550 g/l, erhältlich nach einem Verfahren gemäß Anspruch 5.

**Claims**

**1.** A process for the preparation of a supported catalyst for the polymerisation of α-olefins, by

(1) preparing a carrier based on silica,

(2) loading it with chromium trioxide or with a chromium compound convertible into chromium trioxide under the conditions of stage (3) and

(3) maintaining it in an anhydrous gas stream containing oxygen in a concentration of more than 10% by volume for from 10 to 1,000 minutes at from 400 to 1100 °C,

wherein, for the preparation of the carrier (1),

(1.1) a sodium or potassium waterglass solution is introduced into a stream of an aqueous mineral acid under angular momentum, longitudinally as well as tangentially to the stream, the resulting silica hydrosol is sprayed in the form of drops into a gaseous medium and is allowed to solidify to the hydrogel, and the hydrogel thus obtained is freed from salts by washing without prior aging,

(1.2) not more than 30% of the water contained in the hydrogel is extracted from the hydrogel (1.1) by means of a $C_1$-$C_4$-alkanol or $C_3$-$C_5$-alkanone or a mixture thereof,

(1.3) the hydrogel is dried until no further weight loss occurs at 180 °C under reduced pressure of 10 mmHg xerogel formation takes place,

(1.4) and the xerogel thus obtained is milled and is fractioned according to particle size.

**2.** A process as claimed in claim 1, wherein the drying of the hydrogel (1.3) is carried out without prior extraction (1.2).

3. A process as claimed in claim 1 or 2, wherein the carrier (1) used is a silica xerogel having a particle diameter of from 1 to 2,000 $\mu$m, a surface area of from 100 to 1,000 $m^2/g$ and a pore volume of from 0.5 to 1.5 $cm^3/g$.

4. A supported catalyst for the polymerization of $\alpha$-olefins, obtainable by a process as claimed in any of claims 1 to 3.

5. A process for the preparation of a high molecular weight ethene homopolymer or ethene copolymer with minor amounts of polymerised $C_3$-$C_{12}$-$\alpha$-monoolefins by polymerization of the monomers at from 70 to 150°C and from 2 to 150 bar by means of a chromium trioxide catalyst, wherein the catalyst used is a supported catalyst as claimed in claim 4.

6. An ethene homopolymer or ethene copolymer with minor amounts of polymerized $C_3$-$C_{12}$-$\alpha$-monoolefins in granular form having a mean particle size of from 0.5 to 1.5 mm, a melt flow index (190°C, 21.6 kp) of from 1.0 to 20.0 g/10 min, a melt flow index of from 50 to 200 and a bulk density of from 470 to 550 g/l, obtainable by a process as claimed in claim 5.

**Revendications**

1. Procédé de préparation d'un catalyseur à support pour la polymérisation d'$\alpha$-oléfines, selon lequel
    (1) on prépare un matériau de support à base de dioxyde de silicium,
    (2) on charge le matériau de support de trioxyde de chrome, ou d'un composé du chrome convertible en trioxyde de chrome dans les conditions de l'étape (3) et
    (3) on maintient le produit ainsi obtenu à une température de 400 à 1100°C pendant 10 à 1000 minutes dans un courant de gaz dépourvu d'eau, contenant de l'oxygène en une concentration supérieure à 10% en volume,
    caractérisé en ce que, en vue de la préparation du matériau de (1),
    (1.1) on introduit une solution de silicate de sodium ou de silicate de potassium dans un courant d'un acide minéral aqueux soumis à un moment de giration, comme aussi tangentiellement par rapport à ce courant, on pulvérise l'hydrosol d'acide silicique ainsi engendré sous forme de gouttes dans un milieu gazeux, on le laisse se solidifier en hydrogel et on débarrasse l'hydrogel ainsi obtenu des sels par lavage sans vieillissement préalable,
    (1.2) à partir de l'hydrogel (1.1), on extrait au maximum 30% de l'eau contenue dans l'hydrogel à l'acide d'un alcanol en $C_1$ à $C_4$, d'une alcanone en $C_3$ à $C_5$, ou de leurs mélanges,
    (1.3) on sèche l'hydrogel, jusqu'à ce qu'il ne se produise plus de perte de poids à 180°C sous un vide de 10 torr, si bien que se forme un xérogel,
    (1.4) on broie le xérogel ainsi obtenu et on le fractionne selon le calibre des particules.

2. Procédé suivant la revendication 1, caractérisé en ce que l'on entreprend le séchage de l'hydrogel (1.3) sans extraction préalable (1.2).

3. Procédé suivant la revendication 1 ou 2, caractérisé en ce que l'on utilise un xérogel d'acide silicique à titre de matériau de support (1), d'un diamètre des particules de 1 à 2000 $\mu$m, d'une surface de 100 à 1000 $m^2/g$ et d'un volume des pores de 0,5 à 1,5 $cm^3/g$.

4. Catalyseur à support pour la polymérisation d'$\alpha$-oléfines, que l'on peut obtenir par mise en oeuvre d'un procédé suivant l'une quelconque des revendications 1 à 3.

5. Procédé de fabrication d'homopolymères de l'éthène et de copolymères de l'éthène à proportions mineures d'$\alpha$-monooléfines en $C_3$ à $C_{12}$ incorporées par polymérisation, en recourant à la polymérisation des monomères à des températures de 70 à 150°C et sous des pressions de 2 à 150 bars, à l'aide d'un catalyseur au trioxyde de chrome, caractérisé en ce que l'on utilise, à titre de catalyseur, le catalyseur à support suivant la revendication 4.

6. Homopolymères de l'éthène ou copolymères de l'éthène à proportions mineures d'$\alpha$-monooléfines en $C_3$ à $C_{12}$ incorporées par polymérisation, sous forme granulaire, d'un calibre moyen des particules de 0,5 à 1,5 mm, d'un indice de fusion (190°C, 21,6 kp) de 1,0 à 20,0 g/10 min, d'un rapport d'écoulement à l'état fondu de 50 à 200 et d'une masse spécifique apparente de 470 à 550 g/l, que l'on peut obtenir par mise en oeuvre du procédé suivant la revendication 5.